# FASCICULE DE BREVET EUROPEEN

(11) **EP 3 247 686 B1**
(45) Date de publication et mention de la délivrance du brevet: **05.12.2018**
(21) Numéro de dépôt: 15832807.0
(22) Date de dépôt: 21.12.2015
(51) Int. Cl.: C04B 28/02, C04B 28/08, C04B 7/153, C04B 7/24

(54) **LIANT A BASE DE COMPOSE MINÉRAL SOLIDE RICHE EN OXYDE ALCALINO-TERREUX AVEC ACTIVATEURS PHOSPHATÉS**
BINDEMITTEL AUF DER BASIS EINER FESTEN MINERALISCHEN VERBINDUNG REICH AN ERDALKALIMETALLOXID MIT PHOSPHATHALTIGEN AKTIVATOREN
BINDER BASED ON A SOLID MINERAL COMPOUND RICH IN ALKALINE-EARTH OXIDE WITH PHOSPHATE-CONTAINING ACTIVATORS

(30) Priorité: 23.12.2014 FR 1463231
(43) Date de publication de la demande: 29.11.2017
(73) Titulaire: Saint-Gobain Weber, 77170 Servon (FR)
(72) Inventeur: YAMMINE, Joumana, 93300 Rosny sous Bois (FR); TOUTOU-MELINGE, Zahia, 95160 Montmorency (FR)
(74) Mandataire: Saint-Gobain Recherche
(86) Numéro de dépôt international: PCT/FR2015/053689
(87) Numéro de publication internationale: WO 2016/102867

(56) Documents cités:
- EP-A1- 1 188 727
- EP-A2- 2 514 727
- WO-A2-2010/130582
- KR-A- 20130 128 559
- US-A- 5 082 501
- US-A- 5 553 670
- US-A1- 2011 232 532

## Description

La présente invention porte sur un liant hydraulique riche en oxyde de calcium et/ou oxyde de magnésium, activé par un système d'activation consistant en un mélange d'au moins 30% en poids dudit système d'activation d'un sel dérivé de l'acide phosphorique, d'un silicate d'un métal alcalin et d'une source de métal, ainsi que sur des matériaux de construction obtenus à partir de tels liants.

Dans l'objectif de diminuer les quantités de CO₂ rejetées dans l'atmosphère, on cherche aujourd'hui de plus en plus à substituer une partie ou la totalité du ciment Portland utilisé dans la fabrication de béton ou mortier par d'autres liants hydrauliques considérés comme moins polluants. Ainsi on connait des liants hydrauliques dans lesquels une partie ou la totalité du ciment Portland est substitué par des déchets de l'industrie de l'acier ou du charbon tels que les laitiers de hauts fourneaux ou les cendres volantes. Contrairement au ciment Portland, ces composés sont peu hydrauliques par nature et il est nécessaire d'ajouter un activateur pour les dissoudre et les rendre réactifs. Il est connu d'utiliser des agents alcalins en forte quantité, ou bien dont l'alcalinité est élevée, ce qui présente l'inconvénient d'entraîner de fortes augmentations de pH qui rendent délicate la manipulation de tels liants et risquent de provoquer de fortes irritations. La solution proposée dans la demande WO 2011/055063 consiste en une activation alcaline plus douce puisque de très faibles quantités de bases sont nécessaires pour activer le système comprenant des particules de laitiers finement broyées. Toutefois, cette solution n'est pas adaptée si le laitier n'est pas suffisamment fin et n'est pas totalement amorphe. D'autres systèmes proposent d'utiliser une combinaison de plusieurs activateurs alcalins. On citera par exemple le brevet EP 2 297 061 qui utilise comme activateur un composé d'un métal alcalin et un sel de zinc pour un système de liant contenant du sable de fonderie.

US5082501 divulgue un liant hydraulique comprenant au moins 100 ppt des laitiers de hauts-fourneaux, 10 ppt de sodium triphosphate (NaTPP) et 7,5 ppt de MgO. Donc, le système d'activation est constitué de 57,2 % NaTPP et de 42,8 % MgO. Il sont ajouté 353 ppt de sable et 40 ppt d'eau au liant. Dans cette formule de base, le système d'activation représente 15% du poids total du liant et le composé solide minéral constitue 85% du poids total du liant. Les laitiers comprennent 30-40% CaO et 7-10% MgO. Le liant hydraulique peut aussi comprendre en plus 4-15 ppt de fumée de silice (SiO2) et un agent retardateur (plâtre du Paris, anhydrite, plastifiant).

La présente invention propose un liant comprenant au moins 70% en poids d'un composé solide minéral constitué d'au moins un mélange de silice, d'alumine et d'oxydes alcalino-terreux, la somme totale de CaO et MgO représentant au moins 10% en poids du composé solide minéral et un système d'activation défini en revendication 1. Le système d'activation utilisé dans la présente invention permet de rendre réactifs des composés solides minéraux tels que par exemple des laitiers ou des cendres volantes quelle que soit leur cristallinité. Ainsi un tel système permet d'activer des laitiers amorphes mais également partiellement cristallisés dont les tailles de particules peuvent aller jusqu'à 5 mm.

Sous le terme « système d'activation » au sens de la présente invention, on comprend un système comprenant plusieurs composés destinés à améliorer et/ou accélérer la prise et /ou le durcissement du liant, notamment en facilitant la dissolution de ses composants.

Les liants selon la présente invention présentent avantageusement une résistance en compression compatible avec les applications recherchées et notamment pouvant être équivalente à celle obtenue avec du ciment Portland classique. Ils présentent de plus l'avantage d'être compatibles avec les réglementations en vigueur concernant les normes Environnement, Hygiène & Sécurité puisque, contrairement aux liants à base de laitiers ou de cendres volantes activés avec des bases fortes comme la soude qui entraînent des valeurs de pH plus élevées.

Préférentiellement, le liant selon la présente invention comprend au moins 80% en poids dudit composé solide minéral.

Le système d'activation utilisé selon la présente invention comprend au moins 30% en poids d'un composé qui est un sel dérivé de l'acide phosphorique, le pourcentage pondéral étant donné par rapport au poids total du système d'activation. Ce sel est de préférence choisi parmi les polyphosphates de métal alcalin tel que le sodium, potassium ou lithium et leurs mélanges. De façon préférée, l'activateur est un diphosphate ou un triphosphate d'un métal alcalin. Encore plus préférentiellement l'activateur est le triphosphate de sodium de formule Na₅P₃O₁₀. Ces sels dérivés de l'acide phosphorique permettent avantageusement d'améliorer les résistances mécaniques des liants selon la présente invention, par rapport à des systèmes d'activation connus tels que l'activation alcaline réalisée avec un mélange de soude et de silicate ou tels qu'une activation douce comme décrit dans la demande WO 2011/055063.

Pour certaines applications, il est nécessaire d'avoir de bonnes résistances très rapidement aux jeunes âges, c'est-à-dire dès l'application de la composition de mortier ou béton obtenue à partir du liant. Le système d'activation est encore amélioré lorsqu'il comprend d'autres constituants, en plus du sel dérivé de l'acide phosphorique.

Le système d'activation comprend donc, en plus du sel dérivé de l'acide phosphorique, un silicate d'un métal alcalin, le métal alcalin étant de préférence choisi parmi le potassium, le lithium et le sodium et leurs mélanges. La teneur en poids du silicate représente de préférence entre 5 et 70% en poids par rapport au poids total du système d'activation.

Afin d'améliorer encore les résistances aux jeunes âges, on ajoute au système d'activation une source de métal alcalinoterreux et notamment une source de calcium ou de magnésium. Ce composé peut être choisi parmi la chaux, le carbonate de calcium, le ciment portland, le ciment aluminate de calcium, le ciment sulfoaluminate de calcium, la dolomie et l'hydroxyde de magnésium et leurs mélanges. La chaux est particulièrement préférée. La source de métal alcalinoterreux représente de préférence entre 5 et 70% en poids par rapport au poids total du système d'activation.

D'autre part, pour contrôler la réactivité et l'exothermicité des sels dérivés de l'acide phosphorique, le système d'activation peut également comprendre un agent retardateur de prise qui est un sel de formule X⁺A⁻ dans lequel le cation X⁺ est choisi parmi les métaux alcalins, les métaux alcalinoterreux, l'aluminium et l'ion ammonium, et l'anion A- est choisi parmi les anions acétate, citrate, formiate, benzoate, tartrate, oléate, bromure ou iodure. Préférentiellement, l'anion de l'agent retardateur est un acétate et le cation est choisi parmi le lithium, le sodium, le potassium, le magnésium ou le calcium. La quantité d'agent retardateur peut représenter entre 0,1 et 10% en poids du système d'activation. Pour certaines applications, il en effet souhaitable de pouvoir augmenter la durée d'ouvrabilité des systèmes. La présence d'un agent retardateur choisi parmi les composés cités ci-dessus permet notamment de modifier la rhéologie du liant.

Selon l'invention, le liant selon la présente invention comprend un système d'activation qui est constitué d'un mélange d'un sel dérivé de l'acide phosphorique, d'un silicate de métal alcalin et d'une source d'un métal alcalinoterreux. Préférentiellement, le système d'activation est constitué d'un sel dérivé de l'acide phosphorique, d'un silicate de métal alcalin et d'une source de calcium.

Le système d'activation est ajouté au liant selon la présente invention dans une quantité variant de préférence entre 3 et 30% en poids, de préférence entre 5 et 25% en poids, par rapport au poids total de liant.

Le liant selon la présente invention est essentiellement à base d'un composé solide minéral constitué d'au moins un mélange de silice, d'alumine et d'oxydes alcalino-terreux, la somme totale de CaO et MgO représentant au moins 10% en poids du composé solide minéral. De façon préférée, la somme totale de CaO et MgO représente au moins 20% du poids du composé minéral solide. Préférentiellement, le dit composé minéral solide est un laitier, amorphe ou cristallisé, des cendres volantes et/ou des poudres de verre. Les laitiers peuvent être des laitiers d'aciérie ou des laitiers de hauts-fourneaux. Les cendres volantes sont préférentiellement des cendres volantes de classe C.

Le liant selon l'invention peut également comprendre d'autres types de liants, comme par exemple du ciment Portland, du ciment alumineux, du ciment sulfoalumineux, du ciment bélitique, du ciment de mélange pouzzolaniques comprenant éventuellement des cendres volantes, des fumées de silice, du schiste calciné, des pouzzolanes naturelles ou calcinées, une source de sulfate de calcium, tel que le plâtre ou hémihydrate, le gypse et/ou l'anhydrite. Lorsqu'ils sont présents, ces liants représentent moins de 27% en poids par rapport au poids total de liant.

Le liant selon l'invention est avantageusement utilisé en combinaison avec des charges, des fillers, du sable tels que du quartz, du calcaire, de la wollastonite, du métakaolin, du verre broyé, de la laine de roche, de la laine de verre ou de la dolomite, ou encore de sables et granulats issus des bétons de déconstruction. Il peut également être utilisé avec des charges de faible densité comme l'argile expansée, la perlite expansée, les aérogels, la vermiculite, le polystyrène expansé, les granulats de verre expansé, les granulats issus de recyclage de pneus usés.

D'autres additifs conférant des propriétés particulières peuvent également être ajoutés et entrer dans la composition du liant. La teneur de chacun des additifs représente moins de 1% en poids du liant. On citera par exemple, des agents rhéologiques, des agents rétenteurs d'eau, des agents entraîneurs d'air, des agents épaississants, des agents moussants, des agents de protection de croissance de micro-organismes et/ou de bactéries, des agents dispersants, des pigments, des retardateurs, des accélérateurs, ainsi que d'autres agents pour améliorer la prise, le durcissement, la stabilité des produits après application et notamment pour ajuster la couleur, l'ouvrabilité, la mise en oeuvre ou l'imperméabilité.

Le liant selon la présente invention peut également comprendre des adjuvants tels que des plastifiants, par exemple des produits à base d'acides polycarboxyliques et de préférence d'éthers polycarboxyliques, des lignosulphonates, des polynaphtalènes sulphonates, des superplastifiants à base de mélamines, des polyacrylates et/ou des copolymères vinyliques, typiquement dans des teneurs inférieures ou égale à 10% en poids total de liant. Il peut également comprendre des polymères tels que des éthers de cellulose.

De même, il peut comprendre des adjuvants tels que des polymères sous forme liquide et/ou sous forme de poudre redispersable, typiquement dans des teneurs inférieures ou égales à 10% en poids total de liant.

De même encore, il peut comprendre des agents anti-mousses ou surfactants, des agents hydrophobes, des tensioactifs ou agent de surface et/ou des inhibiteurs de corrosion, typiquement dans des teneurs pour chacun de ces agents inférieures ou égale à 1% en poids total de liant.

La présente invention a également pour objet une composition de béton ou un mortier, comprenant au moins un liant hydraulique tel que décrit précédemment. Une telle composition est obtenue en mélangeant le liant décrit ci-dessus avec des granulats, sables et/ou agrégats en présence d'eau. Les granulats ou sables ajoutés au liant dépendent notamment de la nature du matériau que l'on souhaite obtenir. Il s'agit le plus souvent de graviers, sable, dolomite et/ou calcaire de différentes granulométries.

Un autre objet de l'invention porte sur les produits de construction obtenus après hydratation et durcissement de ladite composition de mortier. Ces produits de construction peuvent être des éléments pré-fabriqués, des briques, des plaques, des blocs, des revêtements comprenant au moins un liant hydraulique tel que décrit précédemment. Ces matériaux ont un durcissement et des résistances mécaniques très satisfaisants. Le système d'activation contenu dans le liant permet notamment d'améliorer le durcissement à court terme.

Les liants selon l'invention peuvent être incorporés dans tous types de mortier pré-mélangés comme par exemple des mortiers-colles, des mortiers de jointement, des joints de carrelage, des adhésifs. Ils peuvent également être utilisés pour réaliser des mortiers ou bétons pour sol (chape et enduit de sol), ou pour des mortiers de façade ou enduits muraux intérieurs ou extérieurs, ou peintures minérales tels que des mortiers de ragréage, des sous-enduits, des monocouches, des mortiers d'imperméabilisation, ainsi que tout type d'enduits d'utilisation intérieure ou extérieure.

Les exemples suivants illustrent l'invention sans en limiter la portée.

### Exemples

Différentes formulations de mortiers normalisés ont été préparées. Ces formulations comprennent 1350 g de sable normalisé, 450 g de liant, et un système d'activation. Différents liants et systèmes d'activation ont été testés. Les résultats obtenus sont présentés sous forme de courbe, donnant la résistance en compression en MPa des échantillons obtenus en fonction du temps, exprimé en jours. La quantité d'activateur est indiquée dans les légendes et correspond à la quantité, en pourcentage pondéral, qui est ajoutée aux laitiers de hauts fourneaux et/ou aux cendres volantes. La quantité d'eau introduite pour préparer le mortier est de 225g, ce qui correspond à un ratio eau/liant de 0,5.

Pour chacune des formulations, des éprouvettes de 4x4x16 cm³ sont fabriquées selon le protocole ci-dessous :
- Pré-mélange des poudres de laitiers et/ou cendres volantes et des composants pulvérulents constituant le système d'activation avec le sable durant 1 min à vitesse faible (600rpm)
- ajout de l'eau et mélange à petite vitesse (∼600rpm) pendant 30sec puis mélange à grande vitesse (∼1500rpm) pendant 2min30s
- on coule dans un moule le mortier ainsi obtenu et
- après durcissement, on démoule et on mesure la résistance mécanique (flexion 3 points puis compression), selon la norme NF EN 196-1 (Aout 1995).

Les mesures de résistances à la compression sont effectuées pour tous les échantillons à différents moments pendant la phase de durcissement pour suivre l'évolution en fonction du temps.

A titre de comparaison, des mesures identiques ont été effectuées sur des formulations comprenant :
- 100% de ciment Portland CEM I 52,5 (qui comprend 95% de clinker)
- 100% de ciment CEM III 32,5 qui est un ciment de mélange comprenant 70% de laitier de hauts-fourneaux et 30% de clinker,
- 100% d'un laitier de hauts-fourneaux quasi amorphe (Ecocem) ou 100% de cendres volantes de classe C avec un système d'activation de type activation alcaline constituée d'un mélange de soude NaOH (VWR) et de silicate de sodium Na₂SiO₃ (Metso 510 de PQ corporation), pré-dissout dans de l'eau pour assurer la dissolution complète de ce mélange et par conséquent sa totale efficacité en tant qu'activateur.
- 100% d'un laitier Ecocem activé par un système d'activation douce telle que décrit dans la demande de brevet WO 2011/055063 et comprenant des microparticules de laitiers et une faible quantité de base (composition décrite dans le tableau 1 de l'exemple).

Différents laitiers ou cendres volantes ont été testés dans les exemples ci-après. Leur composition respective et le taux de composés amorphes contenus dans chacun des produits sont donnés dans le tableau ci-dessous. On notera que le laitier Carmeuse est un laitier fortement cristallisé.

| | Laitier CARMEUSE | Laitier ECOCEM Fos-sur-Mer | Laitier Merit 5000 (Merox) | Cendres volantes classes C |
|---|---|---|---|---|
| SiO₂ | 10,10 | 37,22 | 33,90 | 34,10 |
| CaO | 45,70 | 42,37 | 30,80 | 25,00 |
| Al₂O₃ | 2,40 | 10,41 | 13,40 | 17,30 |
| MgO | 6,28 | 8,49 | 16,50 | 4,48 |
| TiO₂ | 0,59 | 0,53 | 2,15 | 1,00 |
| Fe₂O₃ | 26,40 | 0,60 | 0,40 | 5,02 |
| K₂O | 0,10 | 0,34 | 0,50 | 0,39 |
| Na₂O | 0,05 | <0,20 | 0,55 | 1,55 |
| P₂O₅ | 1,61 | 0,02 | 0,01 | 0,51 |
| MnO | 4,30 | 0,25 | 0,45 | 0,07 |
| SO₃ | 0,18 | - | 3,70 | 1,36 |
| S²⁻ | - | 0,89 | - | |
| Taux d'amorphe % | 16 | 99,3 | 96,3 | -95% |

### Exemple 1 (hors invention)

Quatre formulations de liants comprenant du laitier Ecocem ont été préparées comme décrits précédemment, en faisant varier la quantité de tripolyphosphate de sodium (NaTPP) utilisé comme activateur. Le liant 1.5 correspond au comparatif.
Liant 1.1 : 93% poids de laitier Ecocem et 7% poids de NaTPP
Liant 1.2 : 90% poids de laitier Ecocem et 10% poids de NaTPP
Liant 1.3 : 88% poids de laitier Ecocem et 12% poids de NaTPP
Liant 1.4 : 75% poids de laitier Ecocem et 25% poids de NaTPP
Liant 1.5 comparatif : 78% poids de laitier Ecocem, 11% poids de NaOH et 11% poids de Na₂SiO₃, la soude et le silicate de sodium étant préalablement dissous dans l'eau avant d'être mélangés avec le laitier avec un ratio eau/liant = 0.5.

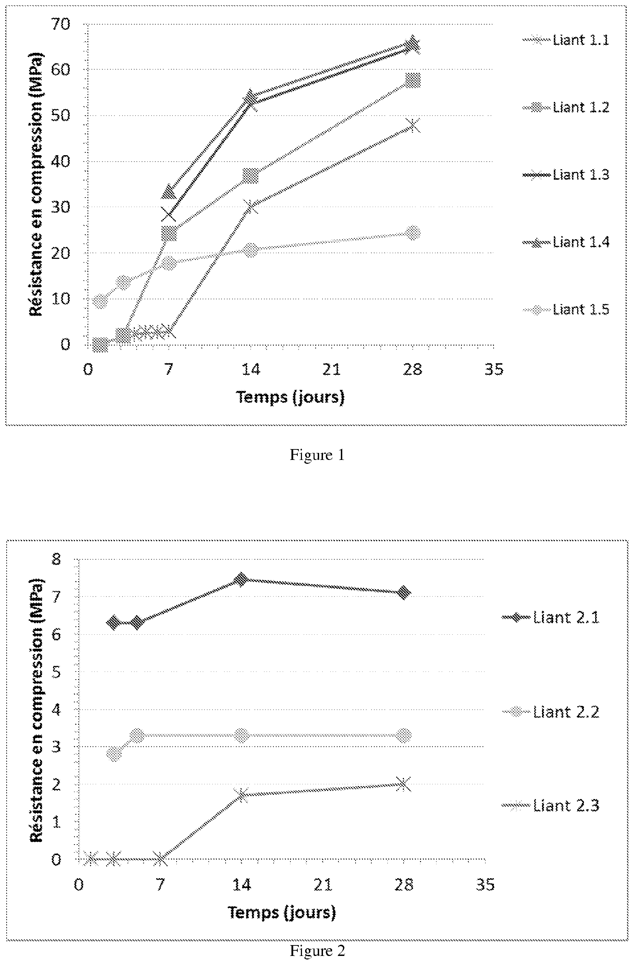

La figure 1 représente l'évolution de la résistance en compression en fonction du temps pour ces différents liants.

Les liants 1.1 à 1.4 présentent une résistance nettement améliorée au bout de 7 à 14 jours, comparativement aux performances obtenues avec un système d'activation alcaline. Il est ainsi possible d'obtenir des résistances supérieures à 40MPa au bout de 28 jours.

### Exemple 2 (hors invention)

Deux formulations de liants comprenant du laitier Carmeuse, donc fortement cristallisé et connu pour être difficile à activer ont été préparées comme décrits précédemment, en faisant varier la quantité de tripolyphosphate de sodium (NaTPP, VWR) utilisé comme activateur. Le liant 2.3 correspond au comparatif.
Liant 2.1 : 75% poids de laitier Carmeuse et 25% poids de NaTPP
Liant 2.2 : 88% poids de laitier Carmeuse et 12% poids de NaTPP
Liant 2.3 comparatif : 78% poids de laitier Carmeuse, 11% poids de NaOH et 11 % poids de Na₂SiO₃, la soude et le silicate de sodium étant préalablement dissouts dans l'eau avant d'être mélangés avec le laitier avec un ratio eau/liant = 0.5.
La figure 2 représente l'évolution de la résistance en compression en fonction du temps pour ces différents liants.

Le liant 2.3 comprenant le laitier Carmeuse et le système d'activation alcaline classique ne fait pas prise aux temps courts et aucune résistance n'est observée avant 7 jours.
Le liant 2.1 ou 2.2 permet d'améliorer la résistance dès le jeune âge (plus de 6MPa à 3 jours pour un liant comprenant 25% en poids de tripolyphosphate de sodium).

### Exemple 3 (hors invention)

Une formulation de liant avec un autre type de laitier a été préparée.
Liant 3.1 : 88% poids de laitier Merit et 12% poids de NaTPP
Liant 3.2 comparatif : 78% poids de laitier Merit, 11% poids de NaOH et 11% poids de Na₂SiO₃, la soude et le silicate de sodium étant préalablement dissouts dans l'eau avant d'être mélangés avec le laitier avec un ratio eau/liant = 0.5.

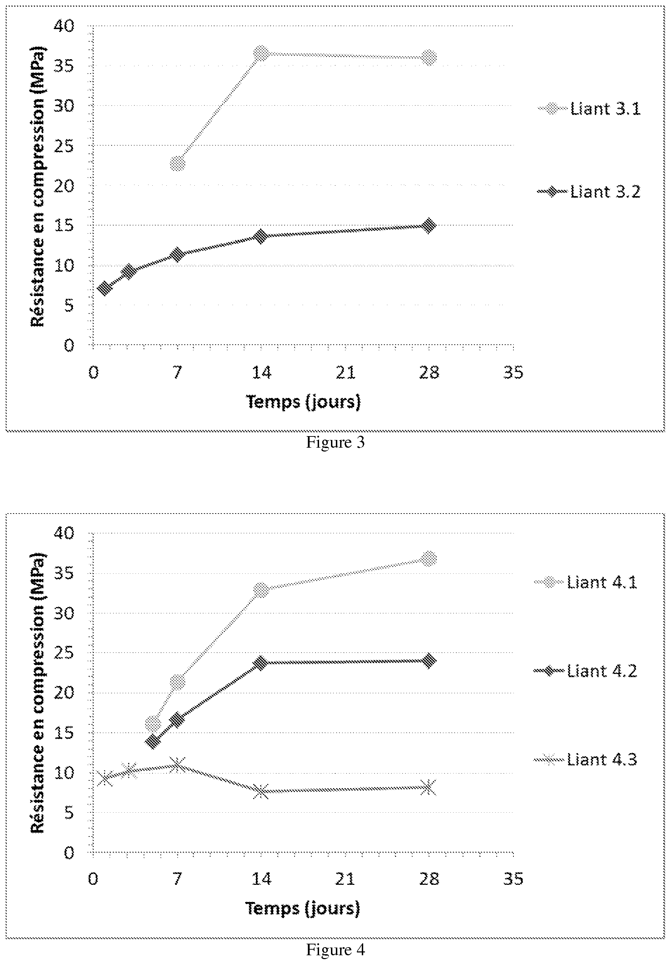

La figure 3 représente l'évolution de la résistance en compression en fonction du temps pour ces différents liants.

Le liant 3.1 présente des résistances améliorées par rapport à celles obtenues avec un système d'activation alcaline.

### Exemple 4 (hors invention)

Deux formulations de liant à base de cendres volantes de classe C ont été préparées.
Liant 4.1 : 75% poids de cendres volantes classe C et 25% poids de NaTPP
Liant 4.2 : 88% poids de de cendres volantes classe C et 12% poids de NaTPP
Liant 4.3 comparatif : 78% poids de laitier Merit, 11% poids de NaOH et 11% poids de Na₂SiO₃, la soude et le silicate de sodium étant préalablement dissouts dans l'eau avant d'être mélangés avec le laitier avec un ratio eau/liant = 0.5.
La figure 4 représente l'évolution de la résistance en compression en fonction du temps pour ces différents liants.

Les liants 4.1 et 4.2 présentent encore des résistances nettement améliorées par rapport à celles obtenues avec un système d'activation alcaline.

### Exemple 5

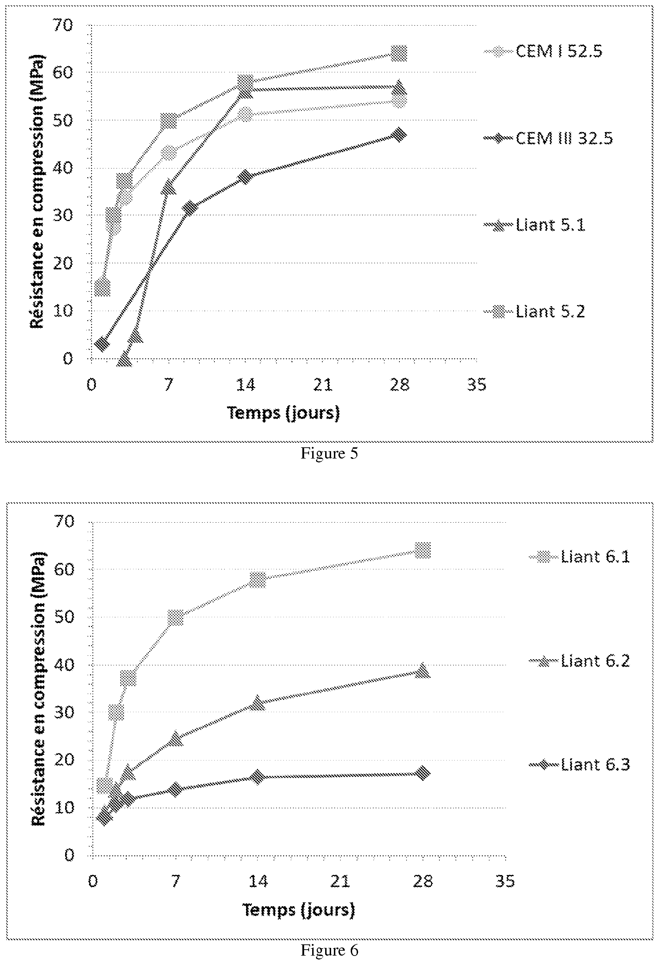

Deux formulations de liants ont été préparées, avec des systèmes d'activation différents.
Liant 5.1 (hors invention) : 86% en poids de laitier Ecocem, 10% en poids de NaTPP et 4 % en poids de silicate de sodium (Metso 510, PQ corporation)
Liant 5.2 (selon l'invention) : 84% en poids de laitier Ecocem, 10% en poids de NaTPP, 4 % en poids de silicate de sodium et 2% en poids de chaux (VWR).
Ces liants sont comparés à un liant de type CEM I 52.5 (liant 5.3 comparatif) et à un liant de type CEM III 32.5 contenant au moins 70% de laitier de haut fourneau (liant 5.4 comparatif). La figure 5 représente l'évolution de la résistance en compression en fonction du temps pour ces différents liants.

Les résistances en compression obtenues avec les liants 5.1 et 5.2 sont tout à fait comparables à celles que l'on obtient avec un liant de type CEM I et sont plus élevées après 7 jours pour le liant 5.2 selon l'invention.

### Exemple 6

Deux formulations de liants selon la présente invention ont été préparées et sont comparées à une formulation de liant dans laquelle le système d'activation est de type « alcaline douce » telle que décrit dans la demande WO 2011/055063.
Liant 6.1 : 84% en poids de laitier Ecocem, 10% en poids de NaTPP, 4 % en poids de silicate de sodium et 2% en poids de chaux (VWR).
Liant 6.2 : 89% en poids de laitier Ecocem, 4.5% de NaTPP, 4.5% en poids de silicate de sodium et 2% en poids de chaux.
Liant 6.3 comparatif : 80% en poids de laitier Ecocem et 20% en poids d'un mélange d'activateurs qui inclut notamment des microparticules de laitier, comme décrit dans WO 2011/055063.
La figure 6 représente l'évolution de la résistance en compression en fonction du temps pour ces différents liants.

Les résistances en compression des liants selon la présente invention sont nettement améliorées par rapport à un liant pour lequel l'activation est obtenue avec des microparticules de laitiers, en présence d'une faible quantité de base.
On note également, en comparant les résistances des liants 6.1, 6.2 et 6.3 que le système d'activation comprenant de la chaux permet d'améliorer les propriétés mécaniques au jeune âge. En comparant les résistances des liants 6.2 et 6.3, on note que, même à taux réduit en activateur, les propriétés mécaniques restent plus élevées que le système d'activation douce qui inclue un mélange d'activateurs notamment des microparticules de laitier.

### Exemple 7

Les formulations suivantes ont été préparées :
Liant 6.1 : 84% en poids de laitier Ecocem, 10% en poids de NaTPP, 4 % en poids de silicate de sodium et 2% en poids de chaux (VWR).
Liant 7.1 : 83% en poids de laitier Ecocem, 10% en poids de NaTPP, 4 % en poids de silicate de sodium, 2% en poids de chaux (VWR) et 1% d'acétate de potassium.
Liant 7.2 : 82% en poids de laitier Ecocem, 10% en poids de NaTPP, 4 % en poids de silicate de sodium, 2% en poids de chaux (VWR) et 2% d'acétate de potassium.

Des tests de temps de prise sont réalisés à partir de l'enfoncement d'une aiguille Vicat dans le mortier selon la norme NF EN 196-3. La mesure de l'évolution du taux d'enfoncement est caractéristique de l'évolution du durcissement et de la prise du matériau.

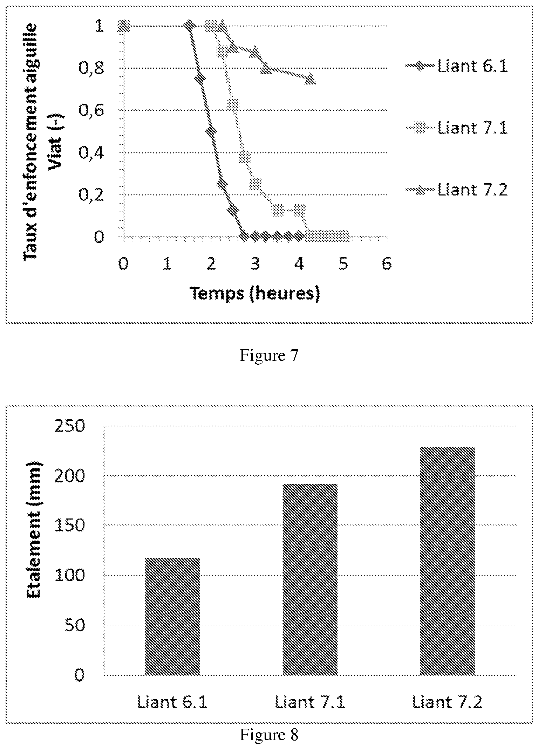

La figure 7 représente le taux d'enfoncement de l'aiguille Vicat en fonction du temps. Les différentes courbes représentées sur cette figure montrent que l'ajout d'acétate de potassium retarde la prise du liant. Plus on ajoute d'agent retardateur, plus le retard de prise est important.

Des tests d'étalement consistant à faire étaler le mortier sous son propre poids après soulèvement d'un cône métallique contenant le mortier ont été réalisés, conformément à la norme EN1015-3 qui décrit la détermination de la consistance d'une pâte fraiche de mortier avec une table à secousses.
Les résultats obtenus sont représentés sur la figure 8 qui montre que l'ajout d'acétate de potassium augmente l'étalement du mortier, d'autant plus que la quantité d'agent retardateur est importante dans la formulation.

## Revendications

1. Liant hydraulique **caractérisé en ce qu'**il comprend :
- au moins 70% en poids d'un composé solide minéral constitué d'au moins un mélange de silice, d'alumine et d'oxydes alcalino-terreux, la somme totale de CaO et MgO représentant au moins 10% en poids du composé solide minéral et
- un système d'activation consistant en un mélange d'un sel dérivé de l'acide phosphorique, d'un silicate d'un métal alcalin et d'une source de métal alcalinoterreux, le sel dérivé de l'acide phosphorique constituant au moins 30% en poids dudit système d'activation.

2. Liant selon la revendication précédente **caractérisé en ce que** le composé solide minéral comprend au moins 20% en poids de CaO et/ou MgO.

3. Liant selon l'une des revendications précédentes **caractérisé en ce que** le composé solide minéral est choisi parmi les laitiers, amorphes ou cristallisés, les cendres volantes et/ou les poudres de verre.

4. Liant selon l'une des revendications précédentes **caractérisé en ce que** le composé solide minéral est choisi parmi les laitiers d'aciérie, les laitiers de hauts-fourneaux ou les cendres volantes de classe C.

5. Liant selon l'une des revendications précédentes, **caractérisé en ce que** ledit sel est choisi parmi les polyphosphates d'un métal alcalin choisi parmi le sodium, le potassium ou le lithium et leurs mélanges.

6. Liant selon la revendication 5 **caractérisé en ce que** ledit sel est un triphosphate ou un diphosphate d'un métal alcalin.

7. Liant selon l'une des revendications précédentes, **caractérisé en ce que** le métal alcalin du silicate est choisi parmi le potassium, le lithium et/ou le sodium, la quantité de silicate de métal alcalin variant de 5 à 70% en poids par rapport au poids total du système d'activation.

8. Liant selon l'une des revendications précédentes, **caractérisé en ce que** la source de métal alcalinoterreux est choisie parmi les ciments portland, les ciments d'aluminate de calcium, les ciments sulfoaluminates de calcium, la chaux, le carbonate de calcium, la dolomie et l'hydroxyde de magnésium, et leurs mélanges, la quantité de source d'un métal alcalinoterreux variant de 5 à 70% en poids par rapport au poids total du système d'activation.

9. Liant selon la revendication 8 **caractérisé en ce que** la source de métal alcalinoterreux est de la chaux.

10. Liant selon l'une des revendications 1 à 9, **caractérisé en ce que** la source de métal alcalinoterreux est une source de calcium.

11. Liant selon l'une des revendications précédentes, **caractérisé en ce que** le système d'activation comprend entre 0,1 et 10% en poids par rapport à son poids total d'un agent retardateur de formule X⁺ A⁻ dans lequel le cation X⁺ est choisi parmi les métaux alcalins, les métaux alcalinoterreux, l'aluminium et l'ion ammonium, et l'anion A- est choisi parmi les anions acétate, citrate, formiate, benzoate, tartrate, oléate, bromure ou iodure.

12. Liant selon l'une des revendications précédentes, **caractérisé en ce que** le système d'activation représente entre 3 et 30% du poids total du liant, de préférence entre 5 et 25% du poids total du liant.

13. Liant selon l'une des revendications précédentes, **caractérisé en ce qu'**il comprend en outre, dans une quantité inférieure à 27 % en poids par rapport au poids total de liant, du ciment Portland, du ciment alumineux, du ciment sulfoalumineux, du ciment bélitique, du ciment de mélange pouzzolaniques, des fumées de silice, du schiste calciné, des pouzzolanes naturelles ou calcinées, une source de sulfate de calcium, tel que le plâtre ou hémihydrate, le gypse et/ou l'anhydrite.

14. Composition de béton ou mortier **caractérisée en ce qu'**elle est obtenue en mélangeant des granulats, sables et/ou agrégats avec au moins un liant selon l'une des revendications 1 à 13 en présence d'eau.

15. Produits de construction tels que mortiers-colles, mortiers de jointement, des joints de carrelage, adhésifs, chapes, enduit de sol, mortiers de façade, enduits muraux intérieurs ou extérieurs, peintures minérales, mortiers de ragréage, sous-enduits, monocouches, mortiers d'imperméabilisation obtenus après hydratation et durcissement d'une composition de béton ou mortier selon la revendication précédente.

## Patentansprüche

1. Hydraulisches Bindemittel, **dadurch gekennzeichnet, dass** es umfasst:
- mindestens 70 Gew.-% einer festen mineralischen Verbindung, gebildet aus mindestens einem Gemisch aus Siliciumdioxid, Aluminiumoxid und Erdalkalimetalloxiden, wobei die Gesamtsumme von CaO und MgO mindestens 10 Gew.-% der festen mineralischen Verbindung darstellt, und
- ein Aktivierungssystem, bestehend aus einem Gemisch eines Salzes, abgeleitet aus der Phosphorsäure, eines Alkalimetallsilikats und einer Quelle eines Erdalkalimetalls, wobei das von der Phosphorsäure abgeleitete Salz mindestens 30 Gew.-% des Aktivierungssystems bildet.

2. Bindemittel nach dem vorangehenden Anspruch, **dadurch gekennzeichnet, dass** die feste mineralische Verbindung mindestens 20 Gew.-% CaO und/oder MgO umfasst.

3. Bindemittel nach einem der vorangehenden Ansprüche, **dadurch gekennzeichnet, dass** die feste mineralische Verbindung aus amorphen oder kristallisierten Schlacken, Flugaschen und/oder Glaspulvern ausgewählt ist.

4. Bindemittel nach einem der vorangehenden Ansprüche, **dadurch gekennzeichnet, dass** die feste mineralische Verbindung aus Stahlwerksschlacken, Hochofenschlacken oder Flugaschen Klasse C ausgewählt ist.

5. Bindemittel nach einem der vorangehenden Ansprüche, **dadurch gekennzeichnet, dass** das Salz aus den Polyphosphaten eines Alkalimetalls, ausgewählt aus Natrium, Kalium oder Lithium und deren Gemischen, ausgewählt ist.

6. Bindemittel nach Anspruch 5, **dadurch gekennzeichnet, dass** das Salz ein Triphosphat oder ein Diphosphat eines Alkalimetalls ist.

7. Bindemittel nach einem der vorangehenden Ansprüche, **dadurch gekennzeichnet, dass** das Alkalimetall des Silikats aus Kalium, Lithium und/oder Natrium ausgewählt ist, wobei die Alkalimetallsilikatmenge von 5 bis 70 Gew.-% in Bezug auf das Gesamtgewicht des Aktivierungssystems schwankt.

8. Bindemittel nach einem der vorangehenden Ansprüche, **dadurch gekennzeichnet, dass** die Quelle des Erdalkalimetalls aus Portland-Zementen, Calciumaluminatzementen, Calciumsulfoaluminatzementen, Kalk, Calciumcarbonat, Dolomit und Magnesiumhydroxid und deren Gemischen ausgewählt ist, wobei die Menge der Quelle eines Erdalkalimetalls von 5 bis 70 Gew.-% in Bezug auf das Gesamtgewicht des Aktivierungssystems schwankt.

9. Bindemittel nach Anspruch 8, **dadurch gekennzeichnet, dass** die Quelle des Erdalkalimetalls Kalk ist.

10. Bindemittel nach einem der Ansprüche 1 bis 9, **dadurch gekennzeichnet, dass** die Quelle des Erdalkalimetalls eine Calciumquelle ist.

11. Bindemittel nach einem der vorangehenden Ansprüche, **dadurch gekennzeichnet, dass** das Aktivierungssystem zwischen 0,1 und 10 Gew.-% in Bezug auf sein Gesamtgewicht eines Verzögerers der Formel X⁺A⁻ umfasst, wobei das Kation X⁺ aus den Alkalimetallen, den Erdalkalimetallen, Aluminium und Ammoniumion ausgewählt ist, und das Anion A- aus Acetat-, Citrat-, Formiat-, Benzoat-, Tartrat-, Oleat-, Bromid- oder lodidanionen ausgewählt ist.

12. Bindemittel nach einem der vorangehenden Ansprüche, **dadurch gekennzeichnet, dass** das Aktivierungssystem zwischen 3 und 30 % des Gesamtgewichts des Bindemittels, vorzugsweise zwischen 5 und 25 % des Gesamtgewichts des Bindemittels, darstellt.

13. Bindemittel nach einem der vorangehenden Ansprüche, **dadurch gekennzeichnet, dass** es ferner in einer geringeren Menge als 27 Gew.-% in Bezug auf das Gesamtgewicht des Bindemittels Portland-Zement, Tonerdezement, Sulfoaluminatzement, Belitzement, Zement aus Puzzolangemisch, Silicastaub, gebrannten Schiefer, natürliche oder getemperte Puzzolane, eine Calciumsulfatquelle wie Gipsmasse oder das Hemihydrat, Gips und/oder Anhydrit umfasst.

14. Beton- oder Mörtelzusammensetzung, **dadurch gekennzeichnet, dass** sie durch Mischen von Granulaten, Sanden und/oder Zuschlägen mit mindestens einem Bindemittel nach einem der Ansprüche 1 bis 13 in Gegenwart von Wasser erhalten wird.

15. Bauprodukte wie Mörtelkleber, Verbindungsmörtel, Fugenmasse, Kleber, Estriche, Bodenputz, Fassadenmörtel, Innen- oder Außenwandputz, Mineralfarben, Ausbesserungsmörtel, Unterputze, Monoschichten, Versiegelungsmörtel, erhalten nach Hydratation und Härten einer Beton- oder Mörtelzusammensetzung nach dem vorangehenden Anspruch.

## Claims

1. Hydraulic binder **characterized in that** it comprises:
- at least 70% by weight of a solid mineral compound consisting of at least one mixture of silica, alumina and alkaline-earth metal oxides, the total sum of CaO and MgO representing at least 10% by weight of the solid mineral compound, and
- an activation system consisting of a mixture of a phosphoric acid-derived salt, of an alkali metal silicate and of a source of alkaline-earth metal, the phosphoric acid-derived salt representing at least 30% by weight of said activation system.

2. Binder according to the preceding claim, **characterized in that** the solid mineral compound comprises at least 20% by weight of CaO and/or MgO.

3. Binder according to either of the preceding claims, **characterized in that** the solid mineral compound is chosen from amorphous or crystalline slags, fly ashes and/or glass powders.

4. Binder according to one of the preceding claims, **characterized in that** the solid mineral compound is chosen from steelmaking slags, blast furnace slags and class C fly ashes.

5. Binder according to one of the preceding claims, **characterized in that** said salt is chosen from polyphosphates of an alkali metal chosen from sodium, potassium or lithium and mixtures thereof.

6. Binder according to the claim 5, **characterized in that** said salt is a triphosphate or a diphosphate of an alkali metal.

7. Binder according to one of the preceding claims, **characterized in that** the alkali metal of the silicate is chosen from potassium, lithium and/or sodium, the amount of alkali metal silicate ranging from 5% to 70% by weight relative to the total weight of the activation system.

8. Binder according to one of the preceding claims, **characterized in that** the source of alkaline-earth metal is chosen from Portland cements, calcium aluminate cements, calcium sulphoaluminate cements, lime, calcium carbonate, dolomite and magnesium hydroxide, and mixtures thereof the amount of the source of an alkaline-earth metal ranging from 5% to 70% by weight relative to the total weight of the activation system.

9. Binder according to the claim 8, **characterized in that** the source of alkaline-earth metal is lime.

10. Binder according to one of Claims 1 to 9, **characterized in that** the source of alkaline-earth metal is a calcium source.

11. Binder according to one of the preceding claims, **characterized in that** the activation system comprises between 0.1% and 10% by weight, relative to its total weight, of a retarder of formula X⁺A⁻ in which the cation X⁺ is chosen from alkali metals, alkaline-earth metals, aluminium and the ammonium ion, and the anion A⁻ is chosen from acetate, citrate, formate, benzoate, tartrate, oleate, bromide or iodide anions.

12. Binder according to one of the preceding claims, **characterized in that** the activation system represents between 3% and 30% of the total weight of the binder, preferably between 5% and 25% of the total weight of the binder.

13. Binder according to one of the preceding claims, **characterized in that** it also comprises, in an amount of less than 27% by weight relative to the total weight of binder, Portland cement, high-alumina cement, sulphoaluminate cement, belite cement, cement formed of a pozzolanic mixture, silica fume, calcined schist, natural or calcined pozzolans, a source of calcium sulphate, such as plaster or hemihydrate, gypsum and/or anhydrite.

14. Concrete or mortar composition, **characterized in that** it is obtained by mixing granulates, sands and/or aggregates with at least one binder according to one of claims 1 to 13 in the presence of water.

15. Construction products such as adhesive mortars, pointing mortars, grouts, adhesives, screeds, floor coating, façade mortars, internal or external wall coatings, mineral paints, smoothing mortars, undercoats, single coats, and mortars for rendering impermeable, obtained after hydration and curing of a concrete or mortar composition according to the preceding claim.
